# EUROPÄISCHE PATENTANMELDUNG

(11) **EP 0 603 621 A2**
(43) Veröffentlichungstag der Anmeldung: **29.06.1994**
(21) Anmeldenummer: 93119589.5
(22) Anmeldetag: 06.12.1993
(51) Int. Cl.: C08G 63/553, C08G 59/42, C08L 63/00, C09D 163/00, C09D 167/06

(54) **Modifizierte saure Polyester und deren Verwendung als Härter in wärmehärtenden Bindemitteln**

(30) Priorität: 14.12.1992 DE 4242052
(71) Anmelder: HOECHST AKTIENGESELLSCHAFT, D-65926 Frankfurt am Main (DE)
(72) Erfinder: Pfeil, Armin, Dr., D-86916 Kaufering (DE); Oberressl, Paul, D-65189 Wiesbaden (DE); Illgen, Reiner-Kurt, D-65203 Wiesbaden (DE)

(57) **Zusammenfassung**

Modifizierte saure Polyester erhalten durch Umsetzung von Polyolen mit ungesättigten Polycarbonsäuren oder deren Anhydriden und konjugierten Diensäuren. Diese Produkte eignen sich als Härter für Epoxidharze, insbesondere zum Härten von Dosenlacken.

## Beschreibung

Es ist bekannt, Polycarbonsäuren bzw. deren Anhydride als Härter für wärmehärtende Bindemittel einzusetzen. Für härtbare Bindemittel kommen Epoxidharze, aber auch Polyester für Einbrennlacke und Pulverharze zum Einsatz. Als Härter steht aber nur eine begrenzte Auswahl an Säuren zur Verfügung und die Säuren neigen zur Sublimation bei den Einbrenntemperaturen, ihr Schmelzpunkt ist oft höher als die Einbrenntemperatur, sie sind schlecht löslich in den benötigten Lösemitteln oder im Bindemittel und sie ergeben oft spröde Filme, so daß flexibilisierende Additive benötigt werden.

Aufgrund dieser nachteiligen Eigenschaften wurden carboxylgruppenhaltige modifizierte Polyester auf der Basis von aromatischen Carbonsäuren (z.B. Trimellithsäure, Pyromellithsäure) als Härter entwickelt, die in vielen dieser Eigenschaften eine Verbesserung brachten. Sie sind überall dort einsatzfähig, wo von höheren Einbrenntemperaturen Gebrauch gemacht wird, z.B. bei Grundierungen, Decklacken, Einschichtlacken, schocktrocknenden Systemen für Coil-Coating und beim Lackieren von Konservendosen.

Speziell für den letzten Anwendungsbereich, wo das Produkt in Kontakt mit Lebensmitteln kommt, werden besonders hohe Anforderungen an das Bindemittel und somit an den Härter gestellt. Für die Konservendosenlackierung mit Weißlacken findet man als Harzkomponente ausschließlich Epoxidharze, als Härter ausschließlich Produkte, die im wesentlichen auf Trimellithsäure basieren. Hierbei bestehen toxikologische Bedenken gegen die Verwendung von Trimellithsäure.

Es stellte sich daher die Aufgabe, einen Härter auf der Basis aliphatischer Polycarbonsäuren zu entwickeln, welcher allgemein für Epoxidharze und Polyester als wärmehärtende Bindemittel und Pulverharze geeignet ist. Speziell Wert gelegt wurde auf den Einsatz im Can-Coating, wobei bei der Auswahl der Rohstoffe die Verfügbarkeit und die lebensmittelrechtliche Zulassung eine entscheidende Rolle spielte.

Es wurde gefunden, daß schon früher beschriebene, carboxylgruppenhaltige Polyester aus Polyolen und aliphatischen Dicarbonsäuren bzw. deren Anhydriden als Härter für Epoxidharze (US 2,683,131, GB-PS 939,358, US 3,027,279) im Bereich des Can-Coating nur ungenügend geeignet sind. Vernetzungsgrad und Sterilisationsfestigkeit erreichen bei weitem nicht die Qualität der zur Zeit allgemein eingesetzten Trimellithsäure-Härter.

Es wurde nun gefunden, daß die gestellte Aufgabe gelöst werden kann durch die Bereitstellung eines sauren Polyesters, der aus ungesättigten Polycarbonsäuren und konjugierten Diensäuren aufgebaut ist.

Gegenstand der Erfindung sind saure Polyester, die erhalten werden durch Umsetzung von Polyolen mit ungesättigten Polycarbonsäuren oder deren Anhydriden und konjugierte Diensäuren.

Als Beispiele für die Polyole seien genannt: Ethan-1,2-diol, Diethylenglycol, Triethylenglycol, Propan-1,2-diol, Dipropylenglycol, Propan-1,3-diol, 2,2-Dimethylpropan-1,3-diol, Butan-1,4-diol, Hexan-1,6-diol, 2-Ethyl-2-methyl-propan-1,3-diol, Bis-(4-hydroxy-cyclohexyl)-methan, 2,2-Bis-(4-hydroxy-cyclohexyl)-propan, 2,2-Bis-(4-(2-hydroxy-ethoxy)-phenyl)-propan,3(4),8(9)-Bis-(hydroxymethyl)-tricyclo-[5.2.1.0 ^{2.6}]-decan, 1,1,1-Trimethylol-ethan, 1,1,1-Trimethylol-propan, Pentaerythrit, Dipentaerythrit, Bis-(2,2-bis(hydroxymethyl)-butyl)-ether, 1,4-Bis-(hydroxymethyl)-cyclohexan, 2,2-Bis-(hydroxymethyl)-propionsäure, Glycerin, Diglycerin, Zuckeralkohole wie Sorbit, Mannit.

Als Beispiele für ungesättigte Polycarbonsäuren seien genannt: Maleinsäure Mesaconsäure, Citraconsäure, Aconitsäure, Fumarsäure, Monochlormaleinsäure, Monobrommaleinsäure, Dichlormaleinsäure und deren Anhydride, soweit möglich.

Als Beispiele für konjugierte Diensäuren seien genannt: Sorbinsäure, Muconsäure, ungesättigte Fettsäuren mit konjugierten Dieneinheiten (sog. Konjuensäuren), Pentadiencarbonsäure, Abietinsäure.

Es kommen jeweils sowohl reine Verbindungen als auch Gemische in Frage. Durch Verwendung geeigneter Gemische der Polyole und der ungesättigten Polycarbonsäuren lassen sich gezielt Verzweigungsgrad, Funktionalität, Säurezahl und damit wichtige Eigenschaften der Produkte steuern.

Die Herstellung dieser sauren Polyester erfolgt durch eine Kombination von Veresterung und Diels-Alder-Reaktion. Hierfür kommen im Prinzip die folgenden drei verschiedenen Verfahrensvarianten in Betracht, je nach der Reihenfolge der Ausgangsverbindungen.
1. Umsetzung des Polyols mit der ungesättigten Polycarbonsäure bzw. deren Anhydrid zu einem ungesättigten, sauren Polyester, an welchen die Diensäure cycloaddiert wird;
2. Veresterung des Polyols mit der Diensäure zum Polyester, anschließend Cycloaddition der ungesättigten Polycarbonsäure bzw. deren Anhydrid;
3. Cycloaddition der ungesättigten Polycarbonsäure an die Diensäure, danach Umsetzung mit dem Polyol.

In allen Fällen können Gemische der Ausgangsverbindungen als auch die reinen Ausgangsverbindungen eingesetzt werden. Die Reaktionen lassen sich wahlweise in geeigneten Lösemitteln durchführen oder - je nach Schmelzpunkt der Ausgangsverbindungen - bevorzugt in der Schmelze.

Für die Veresterung geeignete Lösemittel sind, falls Wasser entfernt werden muß, solche, welche mit Wasser ein Azeotrop bilden, wie z.B. Xylol, Toluol. Der Einsatz geeigneter Katalysatoren ist möglich, hierfür seien beispielsweise genannt: Schwefelsäure, Phosphorsäure, Toluolsulfonsäure etc. Bei der Veresterung von Diensäuren können diese aber unter der Einwirkung des sauren Katalysators polymerisieren.

Die Cycloaddition läßt sich in geeigneten inerten Lösemitteln wie Xylol, Toluol durchführen, als Katalysator werden gegebenenfalls Lewis-Säuren wie Aluminium(III)-chlorid, Bor(III)-fluorid eingesetzt.

Bevorzugt ist aber das Arbeiten in der Schmelze, um den Einsatz von Lösemitteln zu vermeiden und die Reaktionsgeschwindigkeit und den Umsatz zu erhöhen. Außerdem kann es erwünscht sein, bei erhöhten Temperaturen in beschränktem Ausmaß Isomerisierungen und Additionen an den ethylenischen Doppelbindungen herbeizuführen, um z.B. die Löslichkeit oder die Kristallisationsneigung des Produktes günstig zu beeinflussen. Ebenfalls bevorzugt ist es, durch geeignete Wahl des Verfahrens auf Katalysatoren zu verzichten.

Aufgrund all dessen ist es besonders bevorzugt, nach Verfahren 1 und mit Anhydriden der ungesättigten Polycarbonsäuren zu arbeiten. Dazu wird diese Komponente als Anhydrid(gemisch) geschmolzen vorgelegt und mit dem Polyol(gemisch) bei Temperaturen zwischen 60 und 200° C, insbesondere zwischen 80 und 130° C umgesetzt, bis die Säurezahl konstant ist [Z. Ordelt, Farbe und Lack 75 (6), 523, 1969 und DD 256 516 A1]. Sollten die OH-Gruppen zu wenig reaktiv sein, so können gegebenenfalls Katalysatoren verwendet werden, um Umsatz und Reaktionszeit zu verbessern, z.B. tertiäre Amine (1-N,N-Dimethylamino-3-formyl-propan, Benzyl-N-dimethyl-amin, N,N-Dimethyl-4-amino-pyridin, Dimorpholino-ethan) und organische Zinn- oder Phosphorverbindungen (Zinndioctoat, Dibutylzinndilaurat, Triphenylphosphin). Daraufhin wird bei einer Temperatur, welche über der Schmelztemperatur des so erhaltenen sauren Poly-Halbesters und über der Schmelztemperatur der Diensäure (bzw. deren Gemisch) liegt, mit dieser Diensäure bei 100 bis 200° C, insbesondere zwischen 120 und 160° C umgesetzt, bis keine freie Diensäure mehr nachweisbar ist. Unumgesetzte, flüchtige Produkte werden im Vakuum abgezogen. Das erfindungsgemäße Produkt kann dann - je nach gewünschtem Einsatzgebiet - in einem geeigneten Lösemittel aufgenommen oder als Schmelze abgelassen werden. Auf diese Weise erhält man ein carboxylgruppenhaltiges, anhydridfreies Produkt. Die Vorteile dieser Variante sind: man benötigt kein Lösemittel, ein Katalysator ist nicht zwingend erforderlich, die Raum-Zeit-Ausbeute ist hoch, es erfolgt keine Abspaltung von Nebenprodukten, es treten keine Nebenreaktionen auf, die Produktverteilung läßt sich durch die Temperaturführung steuern und man erhält fast farblose Produkte.

Ist es erwünscht, ein anhydridhaltiges Produkt herzustellen, so arbeitet man besser nach der Variante 2, indem man das Anhydrid(gemisch) an den zuvor gebildeten neutralen, dienischen Ester cycloaddiert. Für die vorangehende Veresterung muß in einem mit Wasser ein Azeotrop bildendem Lösemittel unter Einsatz eines geeigneten Katalysators (z.B. Schwefelsäure, p-Toluolsulfonsäure, Phosphorsäure etc.) gearbeitet werden; die Bedingungen sind so zu wählen, daß die Polymerisation der Diensäure gegenüber der Veresterungsreaktion zurückgedrängt wird (US 2,462,337). Der Ester wird im Reaktionsmedium umgehend mit dem Anhydrid umgesetzt und bei Bedarf wird das Lösemittel abdestilliert.

Bei Variante 3 schließlich wird ebenfalls bevorzugt in Schmelze gearbeitet, wobei hier in der Regel höhere Temperaturen nötig sind. Somit sind nicht so günstige Farbzahlen wie nach Variante 1 zu erreichen. Diese Variante ist aber dann vorzuziehen, wenn die Reaktivität zwischen ungesättigtem Ester und Dien-Säure nicht ausreichend hoch ist. In der Regel reagieren die cyclischen Anhydride der ungesättigten Carbonsäuren besser in der Cycloaddition als die entsprechenden Halbester.

Die Mengenverhältnisse Polyol und ungesättigte Polycarbonsäure werden so gewählt, daß das Verhältnis Hydroxyl-Equivalent zu Säure-Equivalent 1:0,8 bis 0,8:1, vorzugsweise 1:0,85 bis 1:0,95 beträgt. Die Mengenverhältnisse von ungesättigter Polycarbonsäure(anhydrid) zu Diensäure werden so gewählt, daß das Verhältnis Dienophil-Equivalent zu Enophil-Equivalent 1:0,8 bis 0,8:1, bevorzugt aber 1:0,85 bis 1:0,95 beträgt. Ganz besonders bevorzugt ist, daß innerhalb der o.g. Grenzen gleichzeitig ein Equivalenz-Unterschuß von Polycarbonsäure(anhydrid) gegenüber Polyol und ein Equivalenz-Unterschuß Diensäure gegenüber Polycarbonsäure(anhydrid) vorhanden ist. Bei den so erhaltenen sauren Polyestern handelt es sich um spröde, helle bis farblose Verbindungen mit einem Schmelzbereich von 25° C bis 200° C, vorzugsweise von 50° C bis 150° C, und mit Säurezahlen zwischen 40 und 800, vorzugsweise zwischen 80 und 650. Sie lassen sich gut zerkleinern bzw. mit hohem Festkörpergehalt in Lösemitteln lösen. Als Lösemittel geeignet sind polare, vorzugsweise aprotische Lösemittel, z.B. Ketone (Butanon, 4-Methyl-pentan-2-on, Isophoron, 3,3,5-Trimethyl-cyclohexanon, 2,6-Dimethyl-heptan-4-on, 2,4-Dimethyl-pentan-3-on, 2-Methoxy-2-methyl-pentan-4-on, 2-Hydroxy-2-methyl-pentan-4-on) oder Ether (1,2-Dimethoxyethan, Diethylenglycoldimethylether, Dipropylenglycoldimethylether, Propylenglycoldibutylether) oder Ester (Pivalinsäureethylester, 1-Ethoxy-propyl-2-acetat, 1-Methoxy-propyl-2-acetat, 3-Ethoxy-propionsäureethylester, 1,2-Propylenglycoldiacetat).

Die so erhaltenen sauren Polyester eignen sich gut als Härter für Epoxidharze. Vorzugsweise nimmt man jedoch als Härter nicht die sauren Polyester in der Form, wie sie oben beschrieben sind, sondern man macht zunächst ein Vorkondensat aus diesen sauren Polyestern mit einer unterstöchiometrischen Menge an Epoxidharz. Auf diese Weise läßt sich die Löslichkeit, Veträglichkeit und Reaktivität eines solchen Einkomponenten-Bindemittels verbessern. Das zu härtende Epoxidharz wird mit dem gegebenenfalls vorkondensierten sauren Polyester bei 50 bis 120 °C im Verhältnis 95 : 5 bis 40 : 60, bevorzugt 15 : 1 bis 3 : 1 (bezogen auf Festharz) homogen vermischt. Danach ist das Bindemittel gebrauchsfertig.

Die Formulierung des Vorkondensats kann dadurch erfolgen, daß der in einem geeigneten Lösemittel gelöste erfindungsgemäße saure Polyester mit einem Unterschuß Polyepoxid vorkondensiert wird, wobei das Verhältnis Säuregruppen zu Epoxidgruppen zwischen 100:1 und 1,1:1, vorzugsweise zwischen 40:1 und 2:1, ganz besonders bevorzugt zwischen 30:1 und 10:1 liegt. Darauf wird mit dem zu härtenden, gegebenenfalls in einem geeigneten Lösemittel gelösten Epoxidharz abgemischt. Werden zur Vorkondensation und zum Härten ein- und dasselbe Epoxid verwendet, so erfolgt die Vorkondensation bevorzugt in der Weise, daß der saure Polyester mit der gesamten Menge des Epoxids abgemischt und für eine begrenzte Zeit einer erhöhten Temperatur ausgesetzt wird, wobei teilweise eine Vorreaktion erfolgt.

Als Beispiele für Epoxide seien genannt: Epoxidether mehrwertiger Phenole (Resorcin, Hydrochinon, Bis-(4-hydroxyphenyl)-methan, Bis-(4-hydroxy-3-methylphenyl)-methan, Bis-(4-hydroxy-3,5-dibrom-phenyl)-methan, 2,2-Bis-(4-hydroxyphenyl)-propan, 1,1-Bis-(4-hydroxyphenyl)-cyclohexan, sowie Phenol-Formaldehyd-Kondensationsprodukte) und mehrwertiger Alkohole (Butandiole, Hexandiole, Glycerin, Pentaerythrit, Zuckeralkohole u.a.). Es können auch Oligomere der zuvor beschriebenen Polyepoxide zum Einsatz kommen. Eine ausführliche Aufzählung findet sich in dem Handbuch "Epoxidverbindungen und Epoxidharze" von A.M. Paquin, Springer Verlag, Berlin 1958, Kapitel IV, und in Lee, Neville, "Handbook of Epoxy Resins", 1967, Chapter 2.

Besonders bevorzugt sind sowohl für die Vorkondensation als auch für das zu härtende Harz Epoxidharze auf der Basis von 2,2-Bis-(4-hydroxyphenyl)-propan (Bisphenol A, Dian) mit einem durchschnittlichen Molekulargewicht von 340-8000. Die vorstehenden Polyepoxide können einzeln oder im Gemisch, gegebenenfalls auch gemischt mit Monoepoxiden, eingesetzt werden.

Als Lösemittel für die 1K-Bindemittel verwendet man polare, vorzugsweise aprotische Lösemittel, z.B. Ketone (Butanon, 4-Methyl-pentan-2-on, Isophoron, 3,3,5-Trimethyl-cyclohexanon, 2,6-Dimethyl-heptan-4-on, 2,4-Dimethyl-pentan-3-on, 2-Hydroxy-2-methyl-pentan-4-on, 2-Methoxy-2-methyl-pentan-4-on) oder Ether (1,2-Dimethoxy-ethan, Diethylenglycoldimethylether, Dipropylenglycoldimethylether, Propylenglycoldibutylether) oder Ester (Pivalinsäureethylester, 1-Ethoxy-propyl-2-acetat, 1-Methoxy-propyl-2-acetat, 3-Ethoxy-propionsäureethylester, 1,2-Propylenglycoldiacetat). Bedingt geeignet sind protische Lösemittel, so z.B. sek-Butanol und tert-Butanol. Es kommen auch Gemische der oben genannten Lösemittel zum Einsatz, auch in Kombination mit aromatischen Kohlenwasserstoffen wie Toluol, Xylol und höher alkylierten Aromaten.

Die Bindemittel, die die erfindungsgemäßen sauren Polyester als solche oder in Form ihrer Vorkondensate, wie oben beschrieben, enthalten, sind aufgrund ihrer hohen Reaktivität, Lagerstabilität und Löslichkeit vielseitig verwendbar. Sie sind überall dort einsatzfähig, wo von Einbrenntemperaturen oberhalb 100° C, vorzugsweise oberhalb 140° C, Gebrauch gemacht wird, z.B. auf dem Gebiet der Lackierung, wie Grundierungen, Decklacke, Einschichtlacke, schocktrocknende Systeme für Coil-Coating und zum Lackieren von Konservendosen. Die hohe Reaktivität der Bindemittel zeigt sich besonders, wenn in sehr kurzen Zeiten, z.B. 1 bis 3 Minuten, und bei verhältnismäßig hohen Temperaturen, z.B. 200° C bis 250° C Objekttemperatur eingebrannt wird.

Die Reaktivität des Bindemittels kann durch Zugabe geeigneter Katalysatoren noch gesteigert werden. Geeignete Katalysatoren, die z.B. in einem Anteil von 0,01 bis 5, vorzugsweise 0,05 bis 1,5 Gew-% (bezogen auf Gesamtfestkörpergehalt) zugegeben sein können, sind u.a. Alkalisalze, basische Katalysatoren anorganischer oder organischer Natur, wie Lithium-, Natrium- oder Kaliumsalze von schwachen organischen und anorganischen Säuren (z.B. Bor-, Benzoe-, Essig-, 2-Ethylhexan- und andere aliphatische Carbonsäuren), Titanverbindungen, Zinnverbindungen (z.B. Zinn(II)-octoat, Dibutylzinnoxid, Dibutylzinndichlorid, Dibutylzinndilaurat), organische Basen (Trialkylamine wie z.B. Tributylamin, Triethanolamin, Benzyldimethylamin; cyclische Basen wie z.B. Diazabicyclooctan, Imidazol, Aryl- und Alkylimidazole, Imidazoline), organische und anorganische Phosphorverbindungen (z.B. Triphenylphosphit, Phosphorsäuren, Phosphorsäure-monoester aliphatischer Alkohole), Säuren (z.B. p-Toluolsulfonsäure, 1,5-Naphthalindisulfonsäure, Heteropolysäuren), jeweils einzeln oder im Gemisch, z.B. Kombinationen der vorgenannten basisch reagierenden Verbindungen mit anderen der vorgenannten Katalysatoren.

Die Bindemittel eignen sich vor allem zur Herstellung von korrosionsschützenden, chemikalienresistenten, sterilisationsfesten o.ä. Überzügen und Zwischenbeschichtungen für die verschiedensten Anwendungsgebiete wie z.B. Auskleiden von Gegenständen, die mit aggressiven Medien wie Treibstoffe, Lösemittel oder Lebensmittel (auch über längere Zeit) in Berührung kommen. Ein besonders bevorzugtes Anwendungsgebiet sind Einschichtlackierungen von Blechen, die durch nachträgliches Tiefziehen, Abkanten, Profilieren, Prägen oder dergleichen in ihre Gebrauchsform gebracht werden. Die Bindemittel eignen sich vor allem, bei entsprechender Wahl der Ausgangsverbindungen für solche Anwendungen, wo in dünner Schicht (0,5-20 µm, vorzugsweise 2-10 µm, und ganz besonders bevorzugt 3-8 µm) z.B. durch Tiefziehen, gute Sterilisationsfestigkeiten erzielt werden müssen.

Die Beschichtungen können auf einer Vielfalt von Substraten erfolgen, sofern diese den Härtungstemperaturen des Überzuges standhalten. Geeignete Substrate sind z.B.: Keramik, Holz, Glas, Beton, Kunststoffe, vorzugsweise Metalle wie z.B. Eisen, Zink, Zinn, Titan, Kupfer, Aluminium, Stahl, Magnesium, Messing oder Bronze, wobei die Substrate (Metalle) alleine oder im Verbund, vorbehandelt oder nicht vorbehandelt eingesetzt werden können. Als Vorbehandlung kommen in Betracht: Geeigenete thermische, mechanische oder chemische Verfahren zur Erhöhung der Haftung und Korrosionsbeständigkeit. Die Bindemittel zeichen sich aber auch durch gute Haftung auf nicht vorbehandelten Metallsubstraten aus.

Die Bindemittel können alleine oder als Gemisch mit anderen zweckentsprechenden Bindemitteln und/oder Polymeren, bzw. Fließmitteln, Haftmitteln, Katalysatoren oder dergleichen, dem Fachmann bekannten Additiven, eingesetzt werden.

Zur Kombination geeignete Bindemittel sind OH-gruppenhaltige Amin-, Melamin-, Guanamin-, Novolak- und insbesondere Phenolharze sowie OH-gruppenhaltige Polyester bzw. Homo- und/oder Copolymerisate. Die Kombinationspartner können, bei geeigneter Wahl bis zu insgesamt 50 Gew.-%, vorzugsweis bis zu 30 Gew.-% und ganz besonders bevorzugt bis zu 10 Gew.-% zugeschlagen werden.

Die Bindemittel können als Klarlack, Pulverlack und/oder unter Verwendung geeigneter (säurefester) Pigmente und Füllstoffe appliziert (Spritzen, Walzen, Tauchen) werden. Als Pigmente und Füllstoffe werden beispielsweise genannt: Titandioxid, Graphit, Ruß, Zinkchromat, Strontiumchromat, Bariumchromat, Bleichromat, Bleicyanamid, Bleisilikochromat, Calciummolybdat, Manganphosphat, Zinkoxid, Cadmuimsulfid, Chromoxid, Zinksulfid, Nickeltitangelb, Chromtitangelb, Eisenoxidschwarz, Eisenoxidrot, Ultramarinblau, Phthalocyaninkomplexe, Naphtholrot oder dergleichen.Dabei ist es überraschenderweise ohne Belang, ob die farbgebenden Pigmente anorganischer oder organischer Natur sind. Ferner sind metallische Pigmente oder solche mit metallartigem Aussehen, wie Aluminium, Aluminium-Bronzen verschiedener Farbtönung, Kupfer, Wolfram-Bronzen, Antimon- und Arsensulfid-Bronzen geeignet, die für die sogenannten "Metallic-Lacke" in Frage kommen. Weitere geeignete Füllstoffe sind z.B. Talkum, Glimmer, Kaolin, Kreide, Quarzmehl, Asbestmehl, Schiefermehl, Bariumsulfat, Silikate, Glasfasern, organische Fasern oder dergleichen.

### BEISPIELE:

### I. Darstellung der modifizierten sauren Polyester

I.1 294 g Maleinsäureanhydrid werden unter Stickstoffatmosphäre geschmolzen und zwischen 60°C und 100°C, zum Schluß bei 110°C solange mit 135 g Butandiol-1,4 umgesetzt, bis die Säurezahl konstant bleibt (432, berechnet 392). Daraufhin wird die Temperatur auf 120° C erhöht und man trägt 336 g Sorbinsäure portionsweise ein, wobei die Temperatur gehalten wird und der Ansatz homogen bleibt. Man läßt bei 120° C bis 150° C solange rühren, bis die Sorbinsäure vollständig abreagiert hat (Kontrolle über DC oder GPC). Es wird zum Entfernen flüchtiger Bestandteile bei dieser Temperatur kurz Vakuum angelegt. Man erhält eine beinahe farblose, glasig-spröde Masse. Säurezahl: 450, Schmelzbereich 80° C bis 100° C. Das Produkt löst sich in sämtlichen polaren Lösemitteln, welche für die Formulierung von Epoxi-Bindemitteln in Frage kommen.
I.2 129 g Propandiol-1,2 und 336 g Sorbinsäure werden mit 900g Xylol unter Stickstoff bei 80° C gelöst. Nach Zugabe von 8 g konz. Schwefelsäure heizt man auf 150° C, wobei heftige Wasserabscheidung auftritt. Wenn die abgeschiedene Wassermenge konstant ist (ca. 60ml), hält man unter Rückfluß und trägt portionsweise 280 g Maleinsäureanhydrid ein. Es wird noch 30 Minuten unter Rückfluß gehalten, dann destilliert man das Xylol (zum Schluß i.Vak.) ab und nimmt die zurückbleibende Schmelze in 745 g Ethoxyethylacetat auf. Man erhält eine bräunliche Lösung, welche als Härter für lösemittelhaltige Bindemittel sofort eingesetzt werden kann, Säurezahl wäßrig: 427, Säurezahl alkoholisch: 342.
I.3 Nach bekannter Methode werden 113 g Sorbinsäure mit 98 g Maleinsäureanhydrid in der Schmelze zu Methylcyclohexentricarbonsäureanhydrid umgesetzt. Man nimmt in 400 g Xylol auf, versetzt mit 42 g Propandiol-1,2 und gibt 0,2 g Zink(II)acetat als Katalysator zu. Es wird bis zum Erreichen einer konstanten Menge Wasser ausgekreist (12ml). Das Xylol wird abgezogen und der viskose Rückstand noch heiß in 253 g Ethoxypropylacetat aufgenommen. Man erhält eine 50%ige Lösung mit wäßriger Säurezahl 245, alkoholisch 196. Es handelt sich also um ein anhydridhaltiges Gemisch.
I.4 143,4 g Maleinsäureanhydrid werden bei 60° C bis 100° C mit 46.6 g Ethandiol-1,2 umgesetzt, wobei eine deutliche Exothermie auftritt. Nach einer Stunde ist die Säurezahl konstant: 448 (theor. 432). In einer Probe sind lediglich Spuren von freiem Maleinsäureanhydrid und Fumarat nachweisbar (Kernresonanz). Nun werden zügig 155,8 g Sorbinsäure eingetragen, wobei gleichzeitig die Temperatur auf 125° C gesteigert wird. Nach einer kräftigen Exothermie (Kühlung bei 165° C) hält man auf 125° C, bis die Sorbinsäure vollständig abreagiert hat (etwa 2 Stunden). Für 15 Minuten wird bei dieser Temperatur Vakuum angelegt. Man erhält ein sehr helles, sprödes Produkt, Säurezahl 464. Das Produkt löst sich in sämtlichen polaren Lösemitteln, welche für die Formulierung von Epoxi-Bindemitteln in Frage kommen.
I.5 147,1 g Maleinsäureanhydrid werden bei 60°C bis 100°C mit 1,68 g 1,1,1-Trimethylolpropan, dann mit 46.6 g Ethandiol-1,2 umgesetzt, wobei eine deutliche Exothermie auftritt. Nach einer Stunde ist die Säurezahl konstant: 449 (theor. 431). Nun werden langsam 155,8 g Sorbinsäure eingetragen, wobei gleichzeitig die Temperatur auf 120° C gesteigert wird. Nach einer schwachen Exothermie hält man auf 140° C, bis die Sorbinsäure vollständig abreagiert hat. Für 15 Minuten wird bei dieser Temperatur Vakuum angelegt. Man erhält ein sehr helles, sprödes Produkt, Säurezahl 464. Das Produkt löst sich in sämtlichen polaren Lösemitteln, welche für die Formulierung von Epoxi-Bindemitteln in Frage kommen.
I.6 Bei 65°C bis 70°C werden 59,1 g Hexandiol-1,6 innerhalb von 20 Minuten in 98,1 g Maleinsäureanhydrid eingetragen, wobei die Temperatur durch die schwache Exothermie auf 80° C steigt. Man hält bei 110° C, bis eine konstante Säurezahl von 371 (theor. 357) erreicht wird, und trägt langsam bei 120°C bis 140°C 106,1 g Sorbinsäure ein, wobei eine leichte Exothermie auftritt. Es wird bei 140° C gehalten, bis keine freie Sorbinsäure mehr nachweisbar ist. Das glasklare, spröde, kaum gelbliche Produkt löst sich in sämtlichen polaren Lösemitteln, welche für die Formulierung von Epoxi-Bindemitteln in Frage kommen. Eine 50%ige Lösung in Ethoxyethylpropionat hat eine Säurezahl von 201.
I.7 147,1 g Maleinsäureanhydrid werden mit 57,2 g Propandiol-1,2 zwischen 60° C und 100° C umgesetzt, bis die Säurezahl den konstanten Wert 470 erreicht (berechnet 412), was etwa 4,5 Stunden dauert . Zu der zähen, fast farblosen Masse gibt man zügig portionsweise 168,2 g Sorbinsäure, wobei man auf 120° C heizt. Durch die Exothermie steigt die Temperatur kurzfristig auf 190° C, wobei schwacher Rückfluß auftritt. Es wird 1 Stunde bei 120° C nachgerührt. Man erhält ein helles, etwas klebriges, sprödes Produkt mit der Säurezahl 461. Es ist kaum noch freie Sorbinsäure nachweisbar.
I.8 Ein Gemisch von 73,5 g Maleinsäureanhydrid und 150 g Bernsteinsäureanhydrid (1:2 val) wird bei 100°C innerhalb von 20 min mit 105,5 g 1,1,1-Trimethylolpropan versetzt. Die Temperatur steigt durch Exothermie bis etwa 150° C, hernach wird bei 130° C gehalten, bis eine Säurezahl von 384 erreicht wird.Innerhalb von 20 min werden bei 110°C 79,8 g Sorbinsäure zudosiert; die Temperatur steigt bis 150° C und wird noch 2 Stunden gehalten. Man hält 15 min unter Wasserstrahlvakuum und füllt die dünnflüssige Schmelze dann ab.
I.9 Eine Schmelze von 147,1 g Maleinsäureanhydrid wird bei 130° C mit 80,5 g 2,2-Dimethylpropandiol-1,3 umgesetzt, bis die Säurezahl den konstanten Wert 381 erreicht. Danach werden langsam 161,5 g Sorbinsäure zudosiert und 2 Stunden bei 150-160° C gehalten. Nach kurzem Anlegen von Vakuum erhält man eine hochviskose Schmelze. Das spröde, fast farblose Produkt besitzt einen. Schmelzbereich von 60-70° C.
I.10 Ein Gemisch von 117,7 g Maleinsäureanhydrid und 40,0 g Bernsteinsäureanhydrid wird bei 95° C mit 75,6 g Butandiol-1,4 umgesetzt, bis eine konstante Säurezahl von 403 erreicht wird. Daraufhin werden bei 100° C 127,8 g Sorbinsäure zugegeben und etwa 3 Stunden bei 130° C gehalten, zum Schluß unter Vakuum. Das fast farblose Produkt besitzt einen Schmelzbereich von 17-30° C.
I.11 184,0 g Maleinsäureanhydrid werden bei 100° C wie üblich mit 145,3 g Triethylenglycol umgesetzt (Katalysator DMAP), wobei die gelbbraune Masse nach fünf Stunden die konstante Säurezahl 371 erreicht. Bei 160° C läßt man 2 Stunden lang mit 200 g Sorbinsäure reagieren, wobei eine kräftige Exothermie auftritt. Zum Schluß wird kurz Wasserstrahlvakuum angelegt. Das gelbliche Produkt weist einen Schmelzbereich von 20-30° C auf.

### II. Darstellung der Bindemittel für Can-Coating/Coil-Coating

Die Härter gemäß Beispiele I.1; I.5; I.7; I.9; I.10 und I.11 wurden in Ethoxyethylpropionat gelöst (Konzentration 50 Gew.-%). Ebenso wurde das Bindemittel (Epoxidharz auf Basis Bisphenol A und Epichlorhydrin, mittleres Molgewicht 3500 g/mol) in Ethoxyethylpropionat gelöst (Konzentration 50 Gew.-%). Die Härterlösung wurde bei Raumtemperatur mit der Epoxidharzlösung gemischt und dann zur Vorkondensation 3 Stunden bei 80 °C gehalten. Die Mengenverhältnisse wurden so gewählt, daß das Äquivalentverhältnis Säuregruppen zu Epoxidgruppen 1,35 : 1 betrug.

Diese Bindemittel wurden als Klarlacke mit einer Rakel als 25 µm-Naßfilm auf Weißbleche aufgezogen und 12 Minuten bei 190 °C eingebrannt. Der eingebrannte Film hatte eine Schichtdicke von 5-8 µm. Die Formulierung von Weißlacken auf Basis dieser Bindemittel gelingt problemlos.

Sämtliche Filme wiesen eine sehr gute Vernetzung (über 100 Doppelwischungen im Acetontest), sehr gute Haftung und Deformierbarkeit auf.

Nach Sterilisation (1 Stunde bei 129 °C in 2% wäßriger Milchsäure) tritt kein Haftungsverlust auf, und vor allem die Bindemittel 1 und 2 zeigen eine gute Oberfläche und kaum verschlechterte Haftung an der Sicke.

Mit diesen Produkten ist die Standard-Qualität der Dosenlacke auf der Basis von Epoxidharzen mit Trimellithsäure-haltigen Härtern erreicht worden.

## Patentansprüche

1. Modifizierte saure Polyester erhalten durch Umsetzung von Polyolen mit ungesättigten Polycarbonsäuren oder deren Anhydriden und konjugierten Diensäuren.

2. Modifizierte saure Polyester nach Anspruch 1, dadurch gekennzeichnet, daß die Mengenverhältnisse von Polyol, ungesättigter Polycarbonsäure(anhydrid) und konjugierten Diensäuren so gewählt sind, daß das Verhältnis Hydroxyl-Equivalent zu Säure-Equivalent 1:0,8 bis 0,8:1 und das Verhältnis Dienophil-Equivalent zu Enophil-Equivalent 1:0,8 bis 0,8:1 beträgt.

3. Verfahren zur Herstellung der modifizierten sauren Polyester nach Anspruch 1 oder 2, dadurch gekennzeichnet, daß man das Polyol in beliebiger Reihenfolge mit der konjugierten Diensäure und der ungesättigten Polycarbonsäure(anhydrid) umsetzt.

4. Verwendung der modifizierten sauren Polyester nach Anspruch 1 oder 2 als Härter für Epoxidharze.

5. Verwendung eines Umsetzungsprodukts der modifizierten sauren Polyester nach Anspruch 1 oder 2 mit einer unterstöchiometrischen Menge eines Epoxidharzes als Härter für Epoxidharze.
